# EUROPÄISCHE PATENTSCHRIFT

(11) **EP 0 342 265 B1**
(45) Veröffentlichungstag und Bekanntmachung des Hinweises auf die Patenterteilung: **16.06.1993**
(21) Anmeldenummer: 88111901.0
(22) Anmeldetag: 23.07.1988
(51) Int. Cl.: B29C 55/00, B29C 55/18

(54) **Verfahren zur Herstellung von Polyolefinfolien oder -platten mit hoher Festigkeit**
Method for the production of polyolefin films or plates with an increased strength
Procédé pour la fabrication de films ou plaques en polyoléfines à résistance mécanique plus élevée

(30) Priorität: 28.08.1987 DE 3728742; 20.05.1988 DE 3817223
(43) Veröffentlichungstag der Anmeldung: 23.11.1989
(73) Patentinhaber: ALKOR GMBH KUNSTSTOFFE, D-81451 München (DE)
(72) Erfinder: Fink, Roland, Dipl.-Ing., D-8130 Starnberg (DE)

(56) Entgegenhaltungen:
- EP-A- 0 041 747
- DE-A- 2 924 063
- DE-A- 3 144 912
- FR-A- 2 017 105
- FR-A- 2 269 410
- PATENT ABSTRACTS OF JAPAN, Band 11, Nr. 71 (M-567), 4. März 1987; & JP-A-61 228 932 (TORAY) 13-10-1986
- DATENBANK WPIL, Nr. 81-80396D [44], Derwent Publications Ltd, London, GB; & JP-A-56 117 624 (HONSHU PAPER MFG.)
- DATENBANK WPIL, Nr. 84-273059 [44], Derwent Publications Ltd, London, GB; & JP-A-59 168 116 (MITSUBISHI PETROCH.)

## Beschreibung

Die vorliegende Erfindung betrifft ein Verfahren zur Herstellung von Polyolefinfolien oder -platten mit höherer Festigkeit, Deformierbarkeit und verbesserter thermischer Umformbarkeit, bestehend aus zweiphasigen Polyolefinsystemen, vorzugsweise aus mindestens zwei Polyolefinen enthaltenden Mischungen, sowie gegebenenfalls Verarbeitungshilfs- oder Zusatzmittel, sowie Füllstoffe.

Die Erfindung umfaßt dabei segmentierte Polyolefine oder Polyolefinblöcke sowie auch spezielle Polyolefinblends und Verfahren zu ihrer Verarbeitung zu hochfesten Folien bzw. Platten für die üblichen Einsatzgebiete von Polyolefinfolien bzw. -platten für die üblichen Einsatzgebiete von Polyolefinfolien bzw. Platten.

Es ist bereits bekannt, daß die Festigkeitseigenschaften von kristallinen Kunststoffen entscheidend von der räumlichen Anordnung der Kettenmoleküle und der sich daraus ergebenden Wechselwirkung abhängen. Eine erhebliche Festigkeitssteigerung wird beim Recken unterhalb des Schmelzpunktes erreicht.

Dabei werden durch Zugspannung die amorphen Anteile die ungeordneten und dann die radial geordneten Lamellen in Zugrichtung orientiert. Bei mono-axialer Orientierung ergibt dies Folien hoher Festigkeit bei verminderter Dehnung in Zugrichtung und schlechter Festigkeit und Dehnung quer dazu. Eine thermische Weiterverarbeitung, z. B. thermoformen oder schweißen, ist praktisch nicht möglich.

Eine weitere Möglichkeit zur Verbesserung der Festigkeit ist das Walzpreßrecken unterhalb des Kristallitschmelzpunktes. Dabei erfolgt eine Ausrichtung der kristallinen Überstrukturen in einem Walzenspalt. Die bei diesem Verfahren auftretenden Linien, bzw. Spreizkräfte, sind mit denen der Metallwalzwerke vergleichbar. Deshalb sind die üblichen Kunststoffwalzwerke, bzw. Kalander dafür nicht geeignet (vergl. DE-A-29 24 063).

Ziel und Aufgabe der vorliegenden Erfindung war es, ein Verfahren zu finden, das bei niedrigen Spalt- und Zugkräften Polyolefinfolien bzw. -platten mit verbesserten Festigkeits- und Weiterverarbeitungseigenschaften ergibt. Dabei sollten die üblichen Kunststoffverarbeitungsmaschinen, z. B. Kalander und Extruder und Weiterverarbeitungseinrichtungen, z. B. Thermoform- und Schweißmaschinen benutzt werden.

Es sollte auch möglich sein, die Transparenz zu verbessern.

Erfindungsgemäß wurde festgestellt, daß diesen Zielen und Aufgaben ein Verfahren zur Herstellung von Polyolefinfolien oder -platten mit hoher Festigkeit, bestehend aus mindestens zwei Polyolefinen bzw. Polyolefinsegmenten oder einer polyolefinhaltigen Mischung sowie gegebenenfalls Verarbeitungshilfs- oder Zusatzmitteln gerecht wird, wobei die Kunststoffe oder die Kunststoffmischungen in mindestens einem Walzen- oder Düsenspalt zu einem Flächengebilde oder schlauchförmigen Gebilde geformt werden, vorzugsweise in einem Walzen- oder Düsenspalt mit einer Schergeschwindigkeit von 100 - 10.OOO s⁻¹ und/oder bei Platten mit einer Dicke von über 0,8 mm mit einer Schergeschwindigkeit von 10 - 5.000 s⁻¹ geformt werden. Gemäß der Erfindung wird bei der Herstellung eine Mischung verwendet, die aus mindestens zwei chemisch unterschiedlichen Polyolefinen oder einem Polymersystem dieser Komponenten oder Polyolefinsegmenten besteht oder diese enthält, deren Kristallitschmelzpunkt eine Differenz von 5 - 80 °C untereinander aufweisen und/oder von denen mindestens ein Polyolefin einen Schmelzviskositätswert Mfi 190.5 bzw. 260/5 besitzt, der um das 1,2 - 20-fache größer ist als der Schmelzviskositätswert des anderen Polyolefins, daß die Polyolefinlegierung oder Mischung zu Folien oder Platten bei einer Verarbeitungstemperatur, die 3 - 90 °C, vorzugsweise 5 - 80 °C, oberhalb des Kristallitschmelzpunktes des in der Mischung, oder Polymersystem enthaltenden höchstschmelzenden Polyolefins liegt und das Flächengebilde oder schlauchförmige Gebilde im Schmelzbereich des höchstschmelzenden Polyolefins oder der höchstschmelzenden Komponente des Polymersystems einer Walzpreß- und Zugreckung unterworfen wird.

Mit Hilfe des erfindungsgemäßen Verfahrens gelingt es, die Eigenschaften der Polyolefinfolien und -platten zu verbessern. Eine sehr hohe Verbesserung der Eigenschaften, insbesondere der Festigkeit und Dehnung, wird dann erzielt, wenn die Folie aus dem Kompressionsspalt, z. B. dem Walzenspalt, bei den Temperaturen innerhalb des Schmelzbereichs des hochschmelzenden Polyolefins oder Polyolefinsegments mono- oder biaxial gezogen wird und die Temperaturen in dieser Zugzone zwischen den Schmelzbereichen beider Polyolefine bzw. Polyolefinsegmente liegt.

Als Schmelzbereich ist der Temperaturbereich zu verstehen in dem die Kristallite schmelzen, d. h. bei der Thermoanalyse, z. B. DSC, der Bereich, in dem sich der Wärmefluß extrem verändert.

Unter diesen Bedingungen entsteht ein Zweiphasensystem in dem überwiegend die Phase aus dem höher schmelzenden Polyolefin, bzw. Polyolefinsegment, orientiert wird, während das niedrig schmelzende Polyolefin, bzw. Polyolefinsegment, nicht oder nur wenig orientiert wird.

Das niedrig schmelzende Polyolefin oder Polyolefinsegment verbessert während der Orientierung die Molekülbeweglichkeit und reduziert dadurch die zur Orientierrung erforderlichen Druck-, Zug- und Scherkräfte.

In der Folie oder Platte bewirkt die unorientierte überwiegend kristalline Phase bessere Verformbarkeit, z. B. Längs- und Querdehnungen und ermöglicht die Thermoumformung und Verschweißung.

Nach einer bevorzugten Ausführungsform des erfindungsgemäßen Verfahrens erfolgt die Preßreckung in mindestens einem Spalt zwischen mit gleicher oder unterschiedlicher Umfangsgeschwindigkeit angetriebenen oder drehenden Walzen bei solchen Walzentemperaturen erfolgt, daß die Folie oder Platte eine Temperatur in dem Schmelztemperaturbereich des hochschmelzenden Polyolefins, besitzt.

Nach einer weiteren bevorzugten Ausführungsform beträgt die Spaltweite 1/10 - 9.5/10 der Foliendicke oder Plattendicke und die Polyolefinfolie oder -platte wird mit einer Geschwindigkeit abgezogen, die 1 bis 60mal, vorzugsweise 1,5 bis 40mal, höher als die Walzengeschwindigkeit ist.

Nach einer bevorzugten Ausführungsform des erfindungsgemäßen Verfahrens ist mindestens ein Polyolefin der Polyolefinmischung ein Propylen homo- oder -copolymerisat und mindestens ein anderes Ethylenhomo- oder -copolymerisat, nach einer anderen bevorzugten Ausführungsform ist mindestens ein Polyolefin der Polyolefinmischung ein Propylenhomo- oder -copolymerisat und mindestens ein weiteres ein Methylpentenhomo- oder -copolymerisat oder es wird ein Polymersystem der Komponenten, bestehend aus einem Polyolefinblock oder aus Polyolefinsegmenten, eingesetzt.

Gemäß der Erfindung gelingt es somit Folien bzw. Platten mit erhöhter Festigkeit und Transparenz mit handelsüblichen Polyolefinen mit Hilfe des erfindungsgemäßen Verfahrens auch unter Verwendung an sich bekannter Verarbeitungsvorrichtungen, z. B. Kalandern, Extrusionsvorrichtungen und dgl. zu fertigen.

Nach einer bevorzugten Ausführungsform wird die Walzenpreßreckung bei Spaltkräften (Linienlasten) zwischen 2 bis 80 N/mm, vorzugsweise 5 bis 75 N/mm, durchgeführt.

Nach einer weiteren bevorzugten Ausführungform beträgt die Abzugsspannung 1/10 bis 1/100 der Zugspannung der Folienbahn bei Raumtemperatur.

Die Spaltweite beträgt daher bevorzugt 2/10 - 9/10 der Schlauch - bzw. Foliendicke. Zusätzlich wird dabei eine Längsverdehnung von 1 : 1 bis 1 : 60, vorzugsweise 1 : 1,5 bis 1 : 40, vorgenommen.

Nach einer weiteren bevorzugten Ausführungsform wird die Folie, die Platte oder der Schlauch nach dem Spalt bei einer Temperatur zwischen den Schmelzbereichen zusätzlich in Querrichtung im Verhältnis 1 : 1 bis 1 : 10, vorzugsweise 1 : 1,5 bis 1 : 8, gedehnt.

Nach einer anderen Ausführungsform wird die Folie, Platte oder der Schlauch nach dem Spalt oberhalb des Schmelzbereiches des niedrig schmelzenden Polyolefins und unterhalb des Schmelzbereiches des hochschmelzenden Polyolefins getempert.

Nach einer weiteren bevorzugten Ausführungsform wird die Folie, die Platte oder der Schlauch oberhalb des Schmelzbereiches des niedrig schmelzenden Polyolefins und unterhalb des Schmelzbereiches des hochschmelzenden Polyolefins tiefgezogen.

Weiterhin wird nach einer anderen bevorzugten Ausführungsform die Folie, Platte oder der Schlauch oberhalb des Schmelzbereiches des niedrig schmelzenden Polyolefins und unterhalb des Schmelzbereiches des hochschmelzenden Polyolefins verschweißt.

Nach einer Ausführungsvarianten werden der Kunststoffmischung zusätzlich ein oder mehrere Copolymere aus C₁ bis C₆ alpha-substituerten Polyolefinen zugesetzt, um Vorteile zu erzielen.

Nach einer bevorzugten Ausführungsform des erfindungsgemäßen Verfahrens werden zwei Ethylenhomo- oder -copolymerisate verwendet, die sich in der Dichte um 0,2 bis 0,7 g/cm³, vorzugsweise um 0,3 bis 0,6 g/cm³, und deren Kristallitschmelzpunkt oder Schmelzbereich um mehr als 3 °C, vorzugsweise mehr als 5 °C, unterschiedlich ist.

Nach einer anderen bevorzugten Ausführungsform werden der Kunststoffmischung 0,1 bis 30 Gew.-Teile, vorzugsweise 1 bis 25 Gew.-Teile (bezogen auf 100 Gew.-Teile der Kunststoffmischung), mindestens eines mineralischen Füllstoffes oder einer Füllstoffmischung zugesetzt.

Nach einer weiteren Ausführungsform werden mehrere übereinanderliegende Folien oder Platten zwischen den Schmelzbereichen des hoch- und niederschmelzenden Polyolefins miteinander parallel und/oder senkrecht zur Orientierungsrichtung verpreßt.

### Beispiele:

### Beispiel 1

Ein Propylen-Ethylen-Blockpolymerisat, Ethylenanteil 7 Gew.-%, Dichte 0,91 g/cm³, Schmelzindex 190/5 5,5 g/10 min, Kristallit Schmelzbereich 140 - 165 °C wurde allgemein und in verschiedenen Mischungsverhältnissen mit einem Niederdruckpolyethylen (HD-PE) Dichte 0,946, Schmelzindex 190/5 2,1 g/10 min, Schmelzbereich 110 - 132 °C auf einem Doppelschneckenextruder mit einer Breitschlitzdüse 100 mm breit, Schneckendurchmesser 50 mm, Schneckenlänge 50 x D, bei einer Massetemperatur 187 zu 0,3 mm dicken Folien extrudiert.

In Abhängigkeit des Mischungsverhältnisses wurden nach DIN 53455 folgende Festigkeitseigenschaften gemessen:

| Mischungsverhältnis Polypropylen (PP)/Polyethylen (PE) | Festigkeit in Längsri. _{σ1}(N/mm-²) | Dehnung in Längsri. _{ε1} (%) | Festigkeit in Querri. _{σq} (N/mm-²) | Dehnung in Querrichtung _{εq} (%) |
|---|---|---|---|---|
| 100/00 | 34,28 | 340 | 25,33 | 65 |
| 90/10 | 30,41 | 405 | 22,6 | 75 |
| 80/20 | 29,82 | 480 | 23,42 | 120 |
| 70/30 | 39,07 | 495 | 22,80 | 135 |
| 60/40 | 40,83 | 510 | 22,22 | 453,3 |
| 50/50 | 37,20 | 545 | 22,85 | 540,0 |
| 40/60 | 36,58 | 550 | 24,6 | 535 |
| 30/70 | 33,33 | 533 | 22,22 | 520,0 |

Die Folien wurden auf 150 °C vorgewärmt und anschliessend zwischen zwei Walzen mit einer Temperatur von 160 °C, einem Walzenspalt von 0,15 mm - 1/2 der Foliendicke - bei einer Walzengeschwindigkeit von 2 U/pm walzengepreßt und mit erhöhter Abzugsgeschwindigkeit abgezogen. Die Spreizkraft der Walzen-Linienkraft lag, abhängig vom Mischungsverhältnis zwischen 25 bis 5 N/mm.

Bei einem Abzugsverhältnis - Reckverhältnis von 1 : 3 ergaben sich nach DIN 53455 folgende Festigkeiten:

| Mischungsverhältnis Polypropylen (PP)/PPolyethylen (PE) | Festigkeit in Längsri. _{σ1}(N/mm-²) | Dehnung in Längsri. _{ε1} (%) | Festigkeit in Querri. _{σq} (N/mm-²) | Dehnung in Querrichtung _{εq} (%) |
|---|---|---|---|---|
| 100/00 | 142,36 | 60 | 25,39 | 150,0 |
| 90/10 | 142,1 | 85 | 25,33 | 180 |
| 80/20 | 141,61 | 98 | 23,03 | 295 |
| 70/30 | 139,60 | 121 | 25,39 | 800,0 |
| 60/40 | 126,56 | 137 | 25,33 | 796,7 |
| 50/50 | 117,85 | 146 | 23,70 | 907,6 |
| 40/60 | 71,26 | 255 | 24,2 | 918 |
| 30/70 | 51,56 | 424 | 24,61 | 1113,3 |

Man erkennt aus diesen Prüfungsergebnissen, daß der Polyethylenanteil bis 50 % die Zugfestigkeit nur relativ wenig verschlechtert und die Dehnungen, insbesondere auch in Querrichtung, stark ansteigen. Dieser Effekt der unorientierten PE-Phase ergibt die verbesserten Gebrauchs- und Verformungseigenschaften.

### Beispiel 2

Unter den in Beispiel 1 angegebenen Bedingungen wurde bei der Mischung 70 Gew.-Teile PP und 30 Gew.-Teile PE das Reckverhältnis variiert und dabei folgende Festigkeiten und Dehnungen in Längsrichtung gemessen.

| Reckverhältnis | N/mm² | % |
|---|---|---|
| 1 : 1,5 | 49,56 | 195 |
| 1 : 2,5 | 81,47 | 121 |
| 1 : 3,0 | 139,6 | 193 |
| 1 : 4,5 | 185,9 | 81 |

### Beispiel 3

Eine Mischung aus 80 Gew.-Teilen HDPE, Dichte 0,960 g/cm², Schmelzinindex 190/2,16 1.5 g/10 min. Kristallitschmelzbereich 110 - 132 °C und 20 Gew.-Teilen LDPE, Dichte 0,918 G/cm², Schmelzindex 190/216 0,3 g/10 min. Kristallitschmelzbereich 90 - 114 °C wurden auf einem Einschneckenextruder - Schneckendurchmesser 25 mm, Schneckenlänge 25 D - mit einer 150 mm breiten Breitschlitzdüse, bei einer Massetemperatur von 150 °C zu einer 0,4 mm dicken Folie extrudiert.

Diese Folie wurde auf 125 °C erwärmt und in den 0,2 mm weiten Spalt von zwei auf 126 °C erwärmten Walzen eingeführt. Bei einer Walzengeschwindigkeit von 1 m/min wurde die Folie durch den Spalt gefördert und anschließend mit erhöhter Geschwindigkeit abgezogen.

Für die verschiedenen Abzugsverhältnisse ergaben sich folgende Reißfestigkeiten und Dehnungen:

| Abzugsverhältnis | Reißfestigkeit | Dehnung % |
|---|---|---|
| 1 : 1,0 | 37 | 975 |
| 1 : 1,5 | 44 | 370 |
| 1 : 3,0 | 115 | 210 |
| 1 : 6,0 | 305 | 40 |

### Beispiel 4

Aus Folien nach Anspruch 1 wurden zur Beurteilung der Thermoformbarkeit Proben aus 100 % Propylencopolymerisat (PP-COPO) sowie Proben aus 70 Gew.-Teilen PP-Copo und 30 Gew.-Teilen PE, mit einem Reckverhältnis 1 : 3, im Wärmeschrank auf 145 °C erwärmt und dann im Verhältnis 1 : 2 gedehnt
100 % PP riß aus den Klemmen (zu hohe Kräfte).

70 Teile pp und 30 Teile PE war im Verhältnis 1 : 2 verdehnbar (Gesamtreckverhältnis 1 : 6).

Die Schrumpfungsmessung bei 130 °C 10 min, ergab eine Schrumpfung von 24 %.

Daraus ist zu folgern, daß bei den Mischungen eine Thermoumformung möglich ist und die Schrumpfung unter 100 °C sicher ausreichend niedrig ist.

## Patentansprüche

1. Verfahren zur Herstellung von Polyolefinfolien oder -platten mit hoher Festigkeit, bestehend aus mindestens zwei Polyolefinen oder einer polyolefinhaltigen Mischung sowie gegebenenfalls Verarbeitungshilfs- oder Zusatzmitteln, wobei die Kunststoffe oder die Kunststoffmischungen in mindestens einem Walzen- oder Düsenspalt zu einem Flächengebilde oder schlauchförmigen Gebilde geformt werden, vorzugsweise in einem Walzen- oder Düsenspalt mit einer Schergeschwindigkeit von 100 - 10.000 s⁻¹ und/oder bei Platten mit einer Dicke von über 0,8 mm mit einer Schergeschwindigkeit von 10 - 5.000 s⁻¹ geformt werden, dadurch gekennzeichnet, daß bei der Herstellung eine Mischung verwendet wird, die aus mindestens zwei chemisch unterschiedlichen Polyolefinen oder einem Polymersystem dieser Komponenten oder Polyolefinblöcken besteht oder diese enthält, deren Kristallitschmelzpunkt eine Differenz von 5 - 80 °C untereinander aufweisen und/oder von denen mindestens ein Polyolefin einen Schmelzviskositätswert Mfi 190.5 besitzt, der um das 1,2 - 20-fache größer ist als der Schmelzviskositätswert des anderen Polyolefins, daß die Polyolefinmischung zu Folien oder Platten bei einer Verarbeitungstemperatur, die 3 bis 90 °C, vorzugsweise 5 bis 80 °C, oberhalb des Kristallitschmelzpunktes des in der Mischung oder dem Polymersystem enthaltenen höchstschmelzenden Polyolefins liegt und das Flächengebilde oder schlauchförmige Gebilde im Schmelzbereich des höchstschmelzenden Polyolefins oder der höchstschmelzenden Komponente des Polymersystems einer Walzpreß- und Zugreckung unterworfen wird.

2. Verfahren nach Anspruch 1, dadurch gekennzeichnet, daß die Preßreckung in mindestens einem Spalt zwischen mit gleicher oder unterschiedlicher Umfangsgeschwindigkeit angetriebenen oder drehenden Walzen bei solchen Walzentemperaturen erfolgt, daß die Folie oder Platte in dem Schmelztemperaturbereich des hochschmelzenden Polyolefins, liegt.

3. Verfahren nach Ansprüchen 1 und 2, dadurch gekennzeichnet, daß die Spaltweite 1/10 - 9.5/10 der Foliendicke oder Plattendicke beträgt und die Polyolefinfolie oder -platte mit einer Geschwindigkeit abgezogen wird, die 1-60mal, vorzugsweise 1,2 bis 40mal, höher als die Walzengeschwindigkeit ist.

4. Verfahren nach einem oder mehreren der Ansprüche 1 bis 3, dadurch gekennzeichnet, daß die Walzenpreßreckung bei Spaltkräften (Linienlasten) zwischen 2 bis 80 N/mm, vorzugsweise 5 bis 75 N/mm, durchgeführt wird.

5. Verfahren nach einem oder mehreren der Ansprüche 1 bis 4, dadurch gekennzeichnet, daß die Abzugsspannung 1/10 bis 1/100 der Zugspannung der Folienbahn bei Raumtemperatur beträgt.

6. Verfahren nach einem oder mehreren der Ansprüche 1 bis 5, dadurch gekennzeichnet, daß die Folie, die Platte oder der Schlauch durch mindestens einen kreisförmigen oder rechteckigen Spalt, der eine kleinere Spaltweite als die Ausgangsdicke der Folie, der Platte oder des Schlauches aufweist, gezogen wird, der aus einem oder mehreren feststehenden Ziehspalten besteht, wobei die Temperatur des Ziehspaltes oder der Ziehspalte so eingestellt wird, daß sie im Schmelzbereich des höherschmelzenden Polyolefins, liegt.

7. Verfahren nach einem oder mehreren der Ansprüche 1 bis 7, dadurch gekennzeichnet, daß die Spaltweite 2/10 - 9/10 der Schlauch - bzw. Foliendicke beträgt und zusätzlich dabei eine Längsverdehnung von 1 : 1 bis 1 : 60, vorzugsweise 1 : 1,5 bis 1 : 40, vorgenommen wird.

8. Verfahren nach einem oder mehreren der Ansprüche 1 bis 7, dadurch gekennzeichnet, daß die Folie, die Platte oder der Schlauch bei einer Temperatur zwischen den Schmelzbereichen zusätzlich in Querrichtung im Verhältnis 1 : 1 - 1 : 10, vorzugsweise 1 : 1,5 bis 1 : 8, unter Zugspannung gedehnt wird.

9. Verfahren nach einem oder mehreren der Ansprüche 1 bis 8, dadurch gekennzeichnet, daß die Folie, Platte oder der Schlauch oberhalb des Schmelzbereiches des niedrig schmelzenden Polyolefins und unterhalb des Schmelzbereiches des hochschmelzenden Polyolefins getempert wird.

10. Verfahren nach einem oder mehreren der Ansprüche 1 bis 9, dadurch gekennzeichnet, daß die Folie, die Platte oder der Schlauch oberhalb des Schmelzbereiches des niedrig schmelzenden Polyolefins und unterhalb des Schmelzbereiches des hochschmelzenden Polyolefins tiefgezogen wird.

11. Verfahren nach einem oder mehreren der Ansprüche 1 bis 10, dadurch gekennzeichnet, daß die Folie, Platte oder der Schlauch oberhalb des Schmelzbereiches des niedrig schmelzenden Polyolefins und unterhalb des Schmelzbereiches des hochschmelzenden Polyolefins verschweißt oder geschweißt, vorzugsweise trennahtverschweißt, wird.

12. Verfahren nach einem oder mehreren der Ansprüche 1 bis 11, dadurch gekennzeichnet, daß mehrere übereinanderliegende Folien oder Platten zwischen den Schmelzbereichen des hoch- und niederschmelzenden Polyolefins miteinander parallel und/oder senkrecht zur Orientierungsrichtung verpreßt werden.

13. Verfahren nach einem oder mehreren der Ansprüche 1 bis 12, dadurch gekennzeichnet, daß mindestens ein Polyolefin der Polyolefinmischung ein Polypropylen, vorzugsweise Propylenhomo- oder -copolymerisat oder -pfropfpolymerisat und mindestens ein anderes ein Polyethylen, vorzugsweise Ethylenhomo-, -copolymerisat oder -pfropfpolymerisat, ist.

14. Verfahren nach einem oder mehreren der Ansprüche 1 bis 13, dadurch gekennzeichnet, daß mindestens ein Polyolefin der Polyolefinmischung ein Polypropylenhomo- oder -copolymerisat und mindestens ein weiteres ein Methylpentenhomo- oder -copolymerisat ist.

15. Verfahren nach einem oder mehreren der Ansprüche 1 bis 14, dadurch gekennzeichnet, daß der Kunststoffmischung zusätzlich ein oder mehrere Copolymere aus C₁ bis C₆ alphasubstituierten Polyolefinen zugesetzt werden.

16. Verfahren nach einem oder mehreren der Ansprüche 1 bis 15, dadurch gekennzeichnet, daß zwei Ethylenhomo- oder -copolymerisate verwendet werden, die sich in der Dichte um 0,2 bis 0,7 g/cm³, vorzugsweise um 0,3 bis 0,6 g/cm³, und/oder im Kristallitschmelzbereich um mehr als 3 °C, vorzugsweise um mehr als 5°C, unterscheiden.

17. Verfahren nach einem oder mehreren der Ansprüche 1 bis 16, dadurch gekennzeichnet, daß der Kunststoffmischung 0,1 bis 30 Gew.-Teile, vorzugsweise 1 bis 25 Gew.-Teile (bezogen auf 100 Gew.-Teile der Kunststoffmischung), mindestens eines mineralischen Füllstoffes oder einer Füllstoffmischung zugesetzt werden.

## Claims

1. Process for producing polyolefin films or polyolefin panels of high strength, consisting of at least two polyolefins or one polyolefin-containing mixture and optionally processing auxiliaries or additives, wherein the plastics or the plastic mixtures are shaped in at least one roller or nozzle gap to form a laminar shape or tubular structure, preferably in a roller or nozzle gap at a shearing rate of 100 - 10,000 s⁻¹ and/or in the case of panels having a thickness of more than 0.8 mm at a shearing rate of 10 - 5,000 s⁻¹, characterised in that a mixture is used in the production which consists of at least two chemically different polyolefins or a polymer system of these components or polyolefin blocks or contains them, the crystallite melting point thereof differing from one another by 5 - 80°C and/or at least one polymer of which having a melt viscosity value Mfi 190.5, which is 1.2 - 20 times greater than the melt viscosity value of the other polyolefin, in that the polyolefin mixture to give films or panels at a processing temperature, which is 3 to 90°C, preferably 5 to 80°C, above the crystallite melting point of the highest melting polyolefin contained in the mixture or the polymer system and the laminar shape or tubular structure is subjected to roller-press stretching or tensile stretching in the melting region of the highest melting polyolefin or the highest melting component of the polymer system.

2. Process according to claim 1, characterised in that press stretching is carried out in at least one gap between rollers rotating or driven at the same or different peripheral speed at roller temperatures such that the film or panel is in the melting point range of the high melting polyolefin.

3. Process according to claims 1 and 2, characterised in that the gap width is 1/10 - 9.5/10 of the film thickness or panel thickness and the polyolefin film or polyolefin panel is drawn off at a rate which is 1-60 times, preferably 1.2 to 40 times, higher than the roller speed.

4. Process according to one or more of claims 1 to 3, characterised in that the roller-press stretching is carried out at gap forces (linear loads) between 2 to 80 N/mm, preferably 5 to 75 N/mm.

5. Process according to one or more of claims 1 to 4, characterised in that the draw-off tension is 1/10 to 1/100 of the tensile stress of the film web at room temperature.

6. Process according to one or more of claims 1 to 5, characterised in that the film, the panel or the tube is drawn through at least one circular or rectangular gap, which has a lower gap width than the starting thickness of the film, the panel or the tube, which consists of one or more fixed stretch gaps, wherein the temperature of the stretch gap or stretch gaps is adjusted so that it is in the melting region of the higher melting polyolefin.

7. Process according to one or more of claims 1 to 7, characterised in that the gap width is 2/10 - 9/10 of the tube or film thickness, and a length extension of 1 : 1 to 1 : 60, preferably 1 : 1.5 to 1 : 40, is also carried out in the process.

8. Process according to one or more of claims 1 to 7, characterised in that the film, the panel or the tube is also stretched under tensile stress at a temperature between the melting ranges in transverse direction in the ratio 1 : 1 - 1 : 10, preferably 1 : 1.5 to 1 : 8.

9. Process according to one or more of claims 1 to 8, characterised in that the film, panel or the tube is tempered above the melting range of the low melting polyolefin and below the melting range of the high melting polyolefin.

10. Process according to one or more of claims 1 to 9, characterised in that the film, the panel or the tube is deep drawn above the melting range of the low melting polyolefin and below the melting range of the high melting polyolefin.

11. Process according to one or more of claims 1 to 10, characterised in that the film, panel or the tube is welded or bonded, preferably separate-seam welded, above the melting range of the low melting polyolefin and below the melting range of the high melting polyolefin.

12. Process according to one or more of claims 1 to 11, characterised in that several superposed films or panels are compressed with one another parallel and/or vertically to the direction of stretching between the melting ranges of the high melting and low melting polyolefin.

13. Process according to one or more of claims 1 to 12, characterised in that at least one polyolefin of the polyolefin mixture is a polypropylene, preferably propylene homopolymer or propylene copolymer or propylene graft polymer and at least one other is a polyethylene, preferably ethylene homopolymer, ethylene copolymer or ethylene graft polymer.

14. Process according to one or more of claims 1 to 13, characterised in that at least one polyolefin of the polyolefin mixture is a polypropylene homopolymer or polypropylene copolymer and at least one other is a

15. Process according to one or more of claims 1 to 14, characterised in that one or more copolymers of C₁ to C₆ alpha-substituted polyolefins are also added to the plastic mixture.

16. Process according to one or more of claims 1 to 15, characterised in that two ethylene homopolymers or ethylene copolymers are used, the density of which differs by 0.2 to 0.7 g/cm³, preferably by 0.3 to 0.6 g/cm³, and/or the crystallite melting range of which differs by more than 3°C, preferably by more than 5°C.

17. Process according to one or more of claims 1 to 16, characterised in that 0.1 to 30 parts by weight, preferably 1 to 25 parts by weight (based on 100 parts by weight of the plastic mixture), of at least one mineral filler or one filler mixture are added to the plastic mixture.

## Revendications

1. Procédé de préparation de feuilles ou plaques de polyoléfines ayant une résistance améliorée, constituées d'au moins deux polyoléfines ou segments de polyoléfines ou d'un mélange de polyoléfines ainsi que, le cas échéant, d'agents auxiliaires de traitement ou d'additifs, les matières plastiques ou les mélanges de matières plastiques étant moulés dans au moins un écartement de rouleaux ou de filière en un produit plat ou une gaine, de préférence dans un écartement de rouleaux ou de filière ayant une vitesse de cisaillement de 100 à 10.000 s⁻¹ et/ou, dans le cas de plaques ayant une épaisseur de plus de 0,8 mm, avec une vitesse de cisaillement de 10 - 5.000 s⁻¹, caractérisé en ce que, lors de la fabrication, on utilise un mélange qui est constitué d'au moins deux polyoléfines chimiquement différentes ou un système polymère de ces composants ou de segments de polyoléfines - ou les contient - dont les points de fusion des cristallites présentent l'un vis-à-vis de l'autre une différence de 5 à 80 °C et/ou dont au moins une polyoléfine possède une valeur de viscosité à l'état fondu Mfi de 190/5 à 260/5, qui est supérieure de 1,2 à 20 fois la valeur de la viscosité à l'état fondu de l'autre polyoléfine, en ce que l'alliage ou le mélange de polyoléfines est transformé en feuilles ou en plaques à une température de traitement qui se situe de 3 à 90 °C, de préférence de 5 à 80 °C au-dessus du point de fusion des cristallites de la polyoléfine de plus haut point de fusion contenue dans le mélange ou dans le système polymère et en ce que le produit plat ou la feuille extrudée est soumise à un étirage par laminage et traction dans le domaine de fusion de la polyoléfine de plus haut point de fusion ou du composant de plus haut point de fusion du système polymère.

2. Procédé selon la revendication 1, caractérisé en ce que l'étirage à la presse se fait dans au moins un écartement formé entre des rouleaux entraînés ou tournant à une vitesse périphérique égale ou différente et à des températures des rouleaux telles que la feuille ou la plaque ait une température qui se trouve dans le domaine des températures de fusion de la polyoléfine de haut point de fusion.

3. Procédé selon les revendications 1 et 2, caractérisé en ce que la largeur de l'écartement est de 1/10 - 9,5/10 de l'épaisseur de la feuille ou de la plaque et la feuille ou la plaque de polyoléfine est étirée à une vitesse qui est 1 à 60 fois, de préférence 1,2 à 40 fois plus élevée que la vitesse des rouleaux.

4. Procédé selon une ou plusieurs des revendications 1 à 3, caractérisé en ce que l'étirage par laminage est réalisé par des forces d'écartement (charges linéaires) entre 2 et 80 N/mm, de préférence 5 à 75 N/mm.

5. Procédé selon une ou plusieurs des revendications 1 à 4, caractérisé en ce que la tension d'étirage est de 1/10 à 1/100 de la sollicitation à la traction de la bande en feuille à température ambiante.

6. Procédé selon une ou plusieurs des revendications 1 à 5, caractérisé en ce que la feuille, la plaque ou la feuille extrudée est étirée à travers au moins un écartement circulaire ou rectangulaire, qui présente une largeur plus faible que l'épaisseur de départ de la feuille, de la plaque ou de la feuille extrudée, qui est constitué d'un ou plusieurs écartements de traction fixes, la température de l'écartement de traction ou des écartements de traction étant réglée de telle sorte qu'elle se trouve dans le domaine de fusion de la polyoléfine à plus haut point de fusion.

7. Procédé selon une ou plusieurs des revendications 1 à 7, caractérisé en ce que la largeur d'écartement atteint donc de préférence 2/10 - 9/10 de l'épaisseur de la feuille extrudée ou du film et, en outre, on effectue ainsi un allongement longitudinal de 1 : 1 à 1 : 60, de préférence de 1 : 1,5 à 1 : 40.

8. Procédé selon une ou plusieurs des revendications 1 à 7, caractérisé en ce que la feuille, la plaque ou la feuille extrudée est allongée par sollicitation à la traction en outre à une température située entre les domaines de fusion dans la direction transversale selon le rapport 1 : 1 à 1 : 10, de préférence de 1 : 1,5 à 1 : 8.

9. Procédé selon une ou plusieurs des revendications 1 à 8, caractérisé en ce que la feuille, la plaque ou la feuille extrudée est recuite au-dessus du domaine de fusion de la polyoléfine de moindre point de fusion et en dessous du domaine de fusion de la polyoléfine de point de fusion élevé.

10. Procédé selon une ou plusieurs des revendications 1 à 9, caractérisé en ce que la feuille, la plaque ou la feuille extrudée est emboutie au-dessus du domaine de fusion de la polyoléfine de moindre point de fusion et en dessous du domaine de fusion de la polyoléfine de point de fusion élevé.

11. Procédé selon une ou plusieurs des revendications 1 à 10, caractérisé en ce que la feuille, la plaque ou la feuille extrudée est soudée, de préférence soudée au chalumeau, au-dessus du domaine de fusion de la polyoléfine de faible point de fusion et en dessous du domaine de fusion de la polyoléfine de point de fusion élevé.

12. Procédé selon une ou plusieurs des revendications 1 à 11, caractérisé en ce que plusieurs feuilles ou plaques superposées sont pressées l'une sur l'autre parallèlement et/ou perpendiculairement à la direction d'orientation entre les domaines de fusion des polyoléfines de haut et de bas points de fusion.

13. Procédé selon une ou plusieurs des revendications 1 à 12, caractérisé en ce qu'au moins une polyoléfine du mélange de polyoléfines est un polypropylène, de préférence un homo, un copolymère ou un polymère greffé de propylène et au moins une autre est un polyéthylène, de préférence un homo, un copolymère ou un polymère greffé d'éthylène.

14. Procédé selon une ou plusieurs des revendications 1 à 13, caractérisé en ce qu'au moins une polyoléfine du mélange de polyoléfines est un homo ou un copolymère de polypropylène et au moins une autre polyoléfine est un homo ou un copolymère de méthylpentène.

15. Procédé selon une ou plusieurs des revendications 1 à 14, caractérisé en ce qu'on ajoute au mélange de matières plastiques en outre un ou plusieurs copolymères de polyoléfines alpha-substituées en C₁ à C₆.

16. Procédé selon une ou plusieurs des revendications 1 à 15, caractérisé en ce qu'on utilise deux homo ou copolymères d'éthylène, qui se différencient en poids spécifique de 0,2 à 0,7 g/cm³, de préférence de 0,3 à 0,6 g/cm³, et en point de fusion des cristallites ou en domaine de fusion de plus de 3 °C, de préférence de plus de 5 °C.

17. Procédé selon une ou plusieurs revendications 1 à 16, caractérisé en ce qu'on ajoute au mélange de matières plastiques 0,1 à 30 parties en poids, de préférence 1 à 25 parties en poids (par rapport à 100 parties en poids du mélange de matières plastiques) d'au moins une charge minérale ou d'un mélange de charges.
